# FASCICULE DE BREVET EUROPEEN

(11) **EP 1 802 486 B1**
(45) Date de publication et mention de la délivrance du brevet: **26.02.2014**
(21) Numéro de dépôt: 05809246.1
(22) Date de dépôt: 18.10.2005
(51) Int. Cl.: B60N 2/20

(54) **DISPOSITIF D'ARTICULATION D'UN SIEGE**
SITZBEWEGUNGSVORRICHTUNG
SEAT ARTICULATING DEVICE

(30) Priorité: 19.10.2004 FR 0411090
(43) Date de publication de la demande: 04.07.2007
(73) Titulaire: GRUPO ANTOLIN-INGENIERIA, S.A., 09080 Burgos (ES)
(72) Inventeur: CHABANNE, Jean-Pierre, 89710 Champvallon (FR); GAGNAIRE, Eric, F-42600 Savigneux (FR)
(74) Mandataire: Delorme, Nicolas
(86) Numéro de dépôt international: PCT/FR2005/002578
(87) Numéro de publication internationale: WO 2006/042959

(56) Documents cités:
- EP-A- 1 083 083
- EP-A- 1 334 866
- EP-A1- 1 297 994
- DE-A1- 3 828 659
- DE-A1- 10 206 304
- DE-A1- 10 240 017
- DE-A1- 10 313 807
- US-A1- 2002 050 733

## Description

La présente invention concerne un siège de véhicule automobile ayant une assise et un dossier, le dossier pouvant occuper plusieurs positions d'inclinaison par rapport à l'assise.

Dans le cahier des charges de nombreux véhicules notamment véhicules break ou monospace, il est demandé à l'habitacle de faire preuve de modularité. Cette modularité est essentiellement conférée par les sièges qui doivent adopter différentes configurations pour, selon les besoins :
- être déployés pour accueillir des passagers,
- être repliés pour prendre une configuration compacte,
- être enlevés du véhicule.

Par ailleurs, ces sièges doivent être conformes à certaines normes de sécurité et doivent donc pouvoir encaisser une décélération importante consécutive à un accident, tout en retenant le passager qui y est installé. Dans le cas d'un siège embarquant une ceinture de sécurité, c'est la structure même du siège qui doit assurer la reprise des efforts causés par une décélération vive.

Classiquement, un siège présente une assise sur laquelle est articulé en rotation un dossier. Le dossier présente une position nominale dans laquelle le dossier est légèrement incliné vers l'arrière pour recevoir, de façon ergonomique et confortable, un passager. L'inclinaison de ce dossier peut être réglée de quelques degrés en avant ou en arrière de cette position nominale.

Pour cela, l'assise est équipée d'un secteur denté et le dossier mobile en rotation par rapport à l'assise est également équipé d'un secteur denté. Ces deux secteurs s'engrènent l'un dans l'autre et, selon la position d'un secteur denté par rapport à l'autre, le dossier possède une inclinaison particulière que choisit l'occupant.

On constate donc que les efforts, notamment en cas d'accident, subis par le dossier sont repris par l'assise par l'intermédiaire des secteurs dentés du dossier et de l'assise.

Ces efforts sont d'autant plus importants que le dossier embarque une ceinture de sécurité qui, donc, assure la retenue du passager.

Il importe donc que, en cas d'accident, la liaison mécanique entre le dossier et l'assise, soit suffisamment résistante pour ne pas céder.

Une disposition, qui permet au siège d'encaisser des efforts selon une composante longitudinale importante, consiste à prévoir un rayon important pour le secteur denté dont le dossier est pourvu. Ceci implique donc un encombrement important pour le secteur denté.

Par ailleurs, pour assurer la modularité requise, un siège doit pouvoir être utilisé en configuration dite "tablette", c'est-à-dire dans une configuration dans laquelle le dossier se rabat sur l'assise et la face postérieure du dossier se trouve sensiblement à l'horizontale et peut être utilisée comme surface de réception ou comme accoudoir.

Dans cette configuration, le dossier doit bien entendu être bloqué par rapport à l'assise. Ce blocage est normalement dévolu au secteur denté.

Or, dans le cas d'un siège embarquant une ceinture de sécurité, la distance séparant l'axe de rotation du dossier de la denture du secteur denté doit être importante pour les raisons expliquées plus haut.

Le secteur denté qui assure le verrouillage du dossier, à la fois dans sa position nominale et dans sa position tablette, conduit à un mécanisme très encombrant.

On connait par le document US 2002/0050733 une ferrure d'articulation pour un siège qui permet de faire pivoter le dossier du siège entre une position droite et une position de tablette et/ou une position de couchette.

Un but de l'invention est donc de proposer un siège de véhicule automobile ayant un dispositif d'articulation qui, tout en étant compact, permet de supporter d'importants efforts, notamment dans le cas de siège embarquant des ceintures de sécurité et assure un blocage du dossier dans sa position nominale et dans sa position tablette.

L'invention a essentiellement pour objet un dispositif d'articulation d'un siège selon la revendication 1.

L'idée à la base de l'invention est de créer un dispositif à deux étages, à savoir un premier étage constitué par un flasque denté de grand rayon pour transmettre des efforts potentiellement importants lorsque le siège est en position nominale et un second étage constitué par une partie en saillie de faible rayon pour bloquer le siège en position tablette.

Selon une forme de réalisation avantageuse, la partie en saillie présente une surface de butée qui est en regard de la dent lorsque le siège est en position nominale.

Cette disposition permet d'améliorer le comportement du siège en cas de forte décélération. En effet, lors du basculement accidentel du flasque, c'est-à-dire par glissement de la denture du flasque par rapport au secteur denté, la butée de la surface en saillie du flasque vient en appui contre la dent du levier et procure un appui supplémentaire pour encaisser l'énergie de la décélération.

Pour rendre le levier solidaire du secteur denté, le secteur denté présente un bossage qui s'engage dans une lumière pratiquée dans le levier.

Selon une forme de réalisation préférée, le secteur denté présente une surface d'appui adjacente à une encoche délimitée par un nez, le dispositif comprenant de plus un doigt primaire pivotant par rapport à axe entre une position de blocage dans laquelle il est en contact avec la surface d'appui, maintenant le secteur denté engrené dans la denture du flasque et une position de déblocage dans laquelle le doigt primaire est en face de l'encoche et vient en appui sur le nez pour faire basculer le secteur denté.

De plus, un ressort est placé sur l'axe de pivotement du doigt primaire dont l'action tient à faire pivoter le doigt primaire contre la surface d'appui du secteur cranté.

De façon préférée, le levier présente une surface d'appui adjacente à une encoche, le dispositif comprenant de plus un doigt secondaire engagé sur le même axe de pivotement A3 que le doigt primaire, pivotant entre une position dans laquelle il est en contact de la surface d'appui pour maintenir le levier dans une position angulaire telle que la dent est engagée dans l'encoche de la partie en saillie du flasque et une position angulaire dans laquelle la dent du levier glisse contre la rampe lors du pivotement du dossier autour de l'axe.

Avantageusement, le doigt primaire et le doigt secondaire sont orientés l'un par rapport à l'autre de telle sorte que, en position nominale, le doigt primaire est en contact de la surface d'appui du secteur denté et le doigt secondaire est en contact de la surface d'appui du levier et de telle sorte que, en position intermédiaire entre la position tablette et la position nominale, le doigt primaire est en appui contre le nez du secteur denté et le doigt secondaire est engagé dans l'encoche du levier.

Selon une possibilité de réalisation, tous les éléments du dispositif sont embarqués dans un boîtier refermé par un couvercle.

Pour éviter des bruits, il comprend un ressort en épingle qui s'appuie sur le secteur denté et sur le levier.

L'amplitude angulaire du dossier est limitée car le boîtier est équipé d'une butée contre laquelle le flasque vient en appui sur le dossier en position nominale arrière contre laquelle le flasque vient talonner, en position tablette.

Pour sa bonne compréhension, l'invention est décrite en référence au dessin ci annexé représentant, à titre d'exemple non limitatif, une forme de réalisation d'un mécanisme d'articulation selon celle-ci.
Figure 1 est une vue en perspective du mécanisme supporté par un boîtier,
Figure 2 est une vue de face du mécanisme en position nominale avant sur lequel le premier étage du mécanisme est représenté, le second étage étant omis,
Figure 3 est une vue similaire à la figure 2, le mécanisme étant en position nominale arrière,
Figure 4 est une vue du mécanisme dans une configuration dans laquelle la rotation du dossier est possible,
Figure 5 représente, en vue de face, le mécanisme complet,
Figure 6 représente le mécanisme complet dans une configuration dans laquelle la rotation du dossier est autorisée,
Figure 7 représente le mécanisme en cours de rotation,
Figures 8 et 9 montrent le mécanisme dans une configuration dans laquelle le siège est en position tablette.

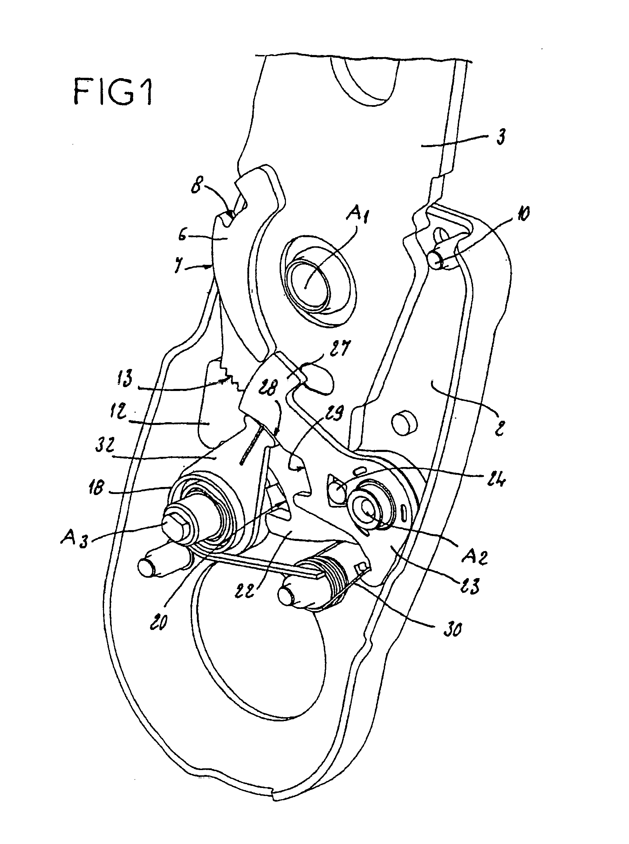

Le mécanisme d'articulation de siège selon l'invention tel qu'il apparaît représenté à la figure 1 est un mécanisme à deux étages.

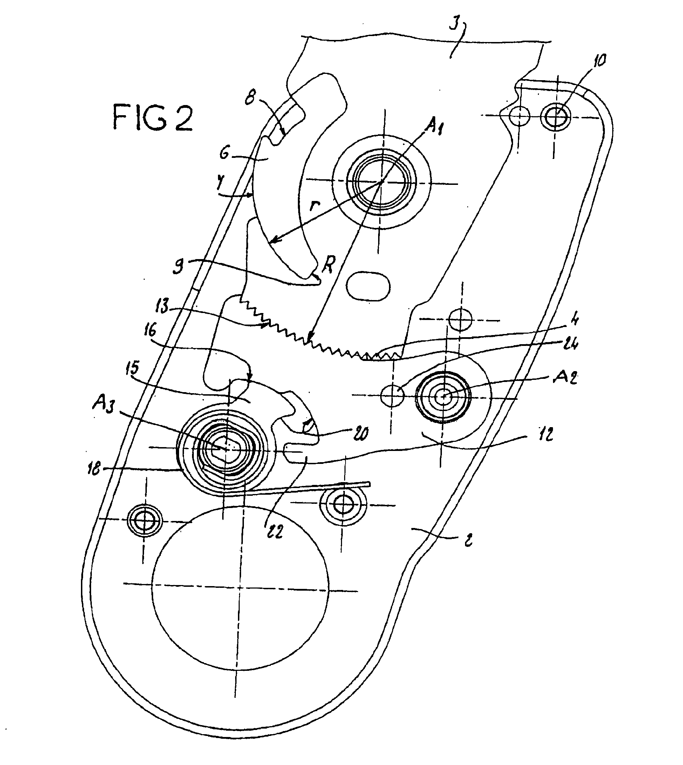

Le premier étage de ce mécanisme apparaît plus clairement représenté aux figures 2 à 4, puisque le deuxième étage n'y est pas représenté.

En se référant plus particulièrement à ces figures, il apparaît que le dispositif est embarqué dans un boîtier 2. Ce dispositif comprend un flasque 3 articulé en rotation par rapport à un axe A1. Bien que cela n'apparaisse pas sur le dessin, le flasque 3 est relié au dossier et c'est donc le flasque 3 qui assure la liaison du dossier avec l'assise. Le boîtier 2 est, en effet, solidaire de l'assise du siège.

Le flasque 3 présente une denture 4 en arc de cercle, la denture 4 étant centrée sur l'axe d'articulation A1. La denture 4 est située sur un arc de cercle de rayon R par rapport à l'axe A1.

Le flasque 3 présente, par ailleurs, une partie en saillie 6 qui, dans l'exemple représenté, est obtenue par semi découpage. Cette partie en saillie 6 pourrait, dans une autre forme de réalisation, être rapportée et fixée au flasque 3 par soudage.

Cette partie en saillie 6 présente une rampe 7 en arc de cercle ayant un rayon r centré sur l'axe d'articulation A1. La partie en saillie présente deux autres caractéristiques structurelles importantes, à savoir une encoche 8 et une surface d'appui 9 sensiblement radiale.

La rotation du flasque 3 est arrêtée par une butée 10 supportée par le boîtier 2.

Le blocage du flasque 3 est réalisé par un secteur 12 denté, mobile par rapport à un axe d'articulation A2, cet axe d'articulation A2 étant supporté par le boîtier 2. Ce secteur denté 12 présente une denture 13 concave qui, lorsqu'elle est engrenée dans la denture4 du flasque 3, empêche la rotation de ce dernier.

Le maintien du secteur denté 12 en contact de la denture du flasque 3 est réalisé par un doigt primaire 15 rotatif qui vient en contact d'une surface d'appui 16 ménagée dans le secteur denté 12. Le doigt primaire 15 est engagé sur un axe d'articulation A3 supporté par le boîtier 2. Un ressort 18 en spirale sollicite le doigt primaire 15 dans une position dans laquelle il est en appui sur la surface d'appui 16 du secteur denté 12.

Bien que cela ne soit représenté sur le dessin, le doigt primaire 15 est relié par une tringle de commande à un organe manipulable par un opérateur qui peut mettre en rotation le doigt primaire dans le sens horaire si l'on se réfère aux figures.

Lorsque le doigt primaire 15 tourne dans le sens horaire, il se trouve alors en face d'une encoche 20 qui est adjacente de la surface d'appui 16 du secteur denté 12.

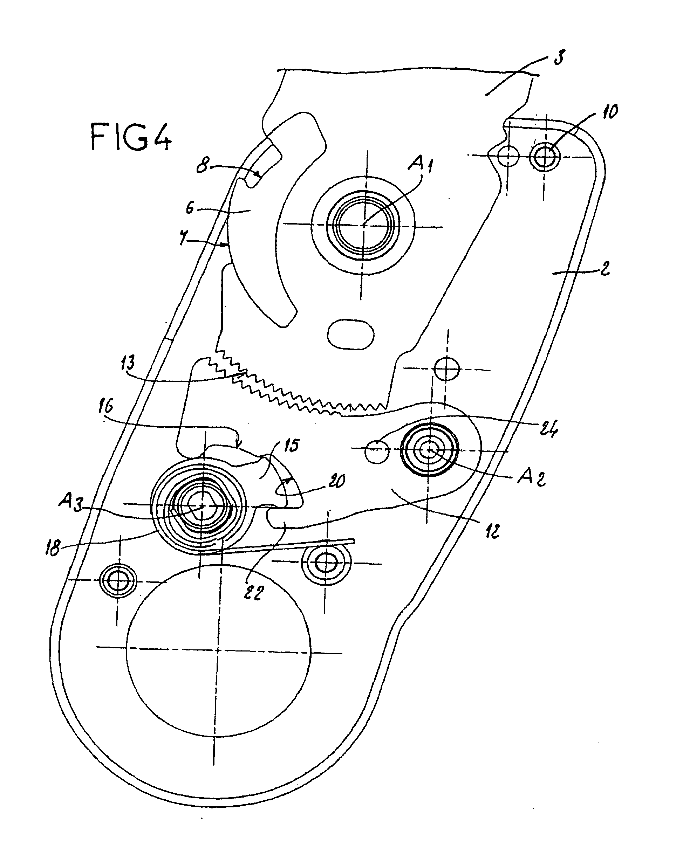

En fin de rotation, le doigt primaire 15 vient s'appuyer sur un nez 22 bordant l'encoche 20 du secteur denté 12. Le doigt primaire 15 en s'appuyant sur le nez 22 du secteur denté 12, fait basculer celui-ci par rapport à son axe de rotation A2. La figure 4 illustre cette configuration du dispositif. On voit alors que la denture 4 du flasque 3 est dégagée de la denture 13 du secteur denté 12.

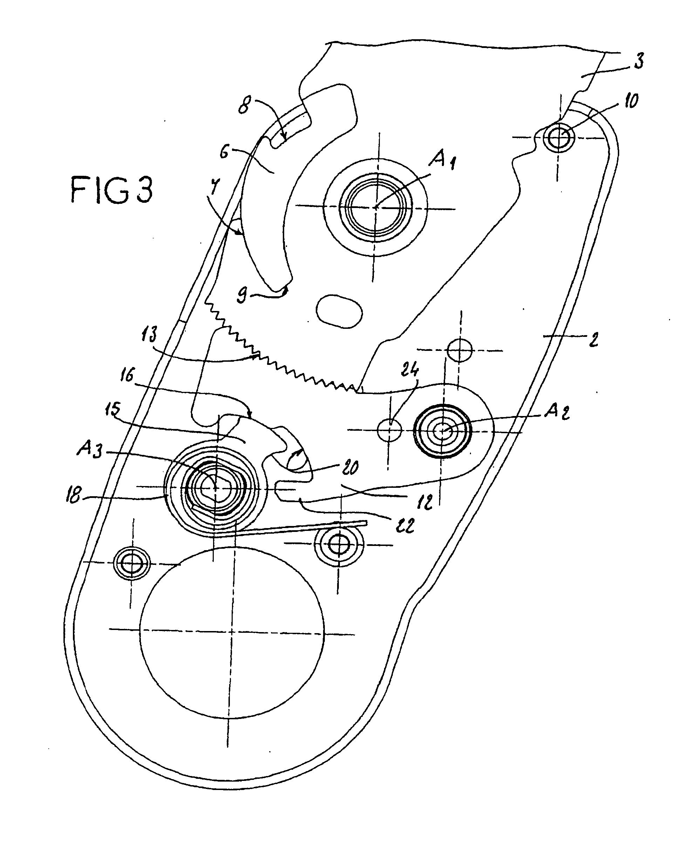

Le flasque 3, qui supporte le dossier avec un second flasque 3 symétrique du premier par rapport à l'assise, permet de régler l'inclinaison du dossier autour de sa position nominale (la figure 3 représentant le flasque 3 et donc le dossier en position nominale arrière) ou permet de le faire basculer vers l'avant.

Un point qu'il est important de noter concernant ce premier étage du dispositif est que le rayon de la denture 4 est particulièrement important et permet, à ce dispositif d'équiper un siège dont le dossier embarque une ceinture de sécurité.

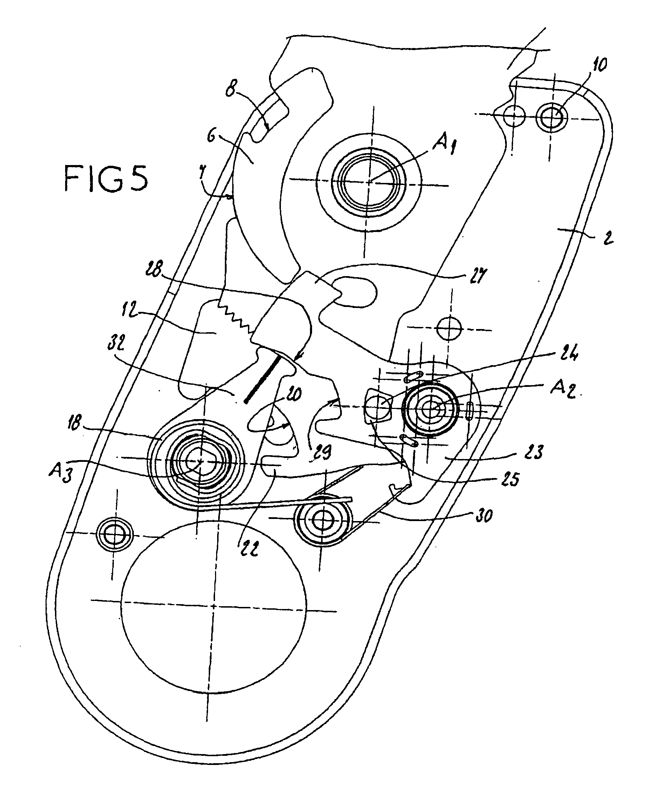

Les figures 5 à 9 montrent le dispositif dans sa totalité et permet de voir le second étage du dispositif.

Comme le montre la figure 5, le dispositif est, en outre, équipé d'un levier 23 qui est engagé sur l'axe d'articulation A2 sur lequel s'articule déjà le secteur denté 12.

Le secteur denté 12 est solidaire du levier 23 par un bossage 24 dépassant de la surface du secteur denté 12 qui s'engage dans une lumière 25 pratiquée dans le levier 23.

On voit donc que, lorsque le secteur denté 12 est mis en rotation, il entraîne avec lui le levier 23.

On note que le levier 23 présente à son extrémité une dent 27 et présente, par ailleurs, une surface d'appui 28 adjacente à une encoche 29.

Un ressort 30 en épingle s'appuie à la fois sur le secteur denté 12 et sur le levier 23 pour éviter des bruits dus à des secousses transmises au siège qui pourraient faire battre les éléments du dispositif entre eux.

Le dernier élément important du second étage est la présence d'un doigt secondaire 32 engagé sur l'axe d'articulation A3 du doigt primaire 15.

La figure 5 représente le dispositif dans sa position nominale. Dans cette position, le doigt secondaire 32 appuie sur la surface d'appui du levier et la dent 27 est en regard de la surface d'appui 9 de la partie en saillie 6 du flasque 3.

Un point qu'il faut remarquer est que, bien que la partie en saillie 6 du flasque 3 soit dans le même plan que le levier 23 et que le doigt secondaire 32, ces trois éléments font fonctionnellement partie du second étage du dispositif même si, structurellement, la partie en saillie 6 est intégrée au flasque 3.

On peut remarquer que ce dispositif, bien qu'étant à deux étages, présente une épaisseur relativement modeste comme on peut le voir sur la figure 1.

Le fonctionnement du dispositif est le suivant. Lorsque le mécanisme est dans sa configuration représentée à la figure 5, le flasque 3 est bloqué puisque sa denture 4 est engagée dans le secteur denté 12 qui lui-même est bloqué par le doigt primaire 15.

Dans le cas où un utilisateur souhaiterait modifier l'inclinaison du dossier par rapport à l'assise, il agit sur un organe de commande qui met en rotation le doigt primaire 15.

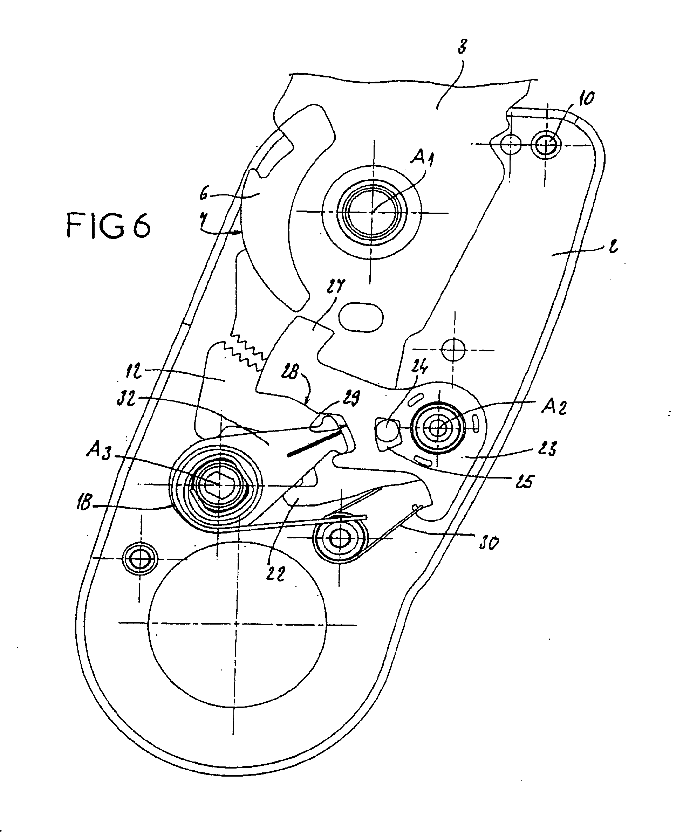

La figure 6 illustre cette configuration du dispositif dans laquelle le doigt primaire 15 est animé d'un mouvement de rotation pour venir appuyer sur le nez 22 du secteur denté 12 et le faire basculer de façon à dégager le secteur denté 12 de la denture 4 du flasque 3.

Dans cette position, le flasque 3 est libre en rotation. L'utilisateur peut alors choisir soit de régler l'inclinaison du dossier autour de sa position nominale, soit de le faire basculer vers l'assise pour le mettre dans une position dite tablette.

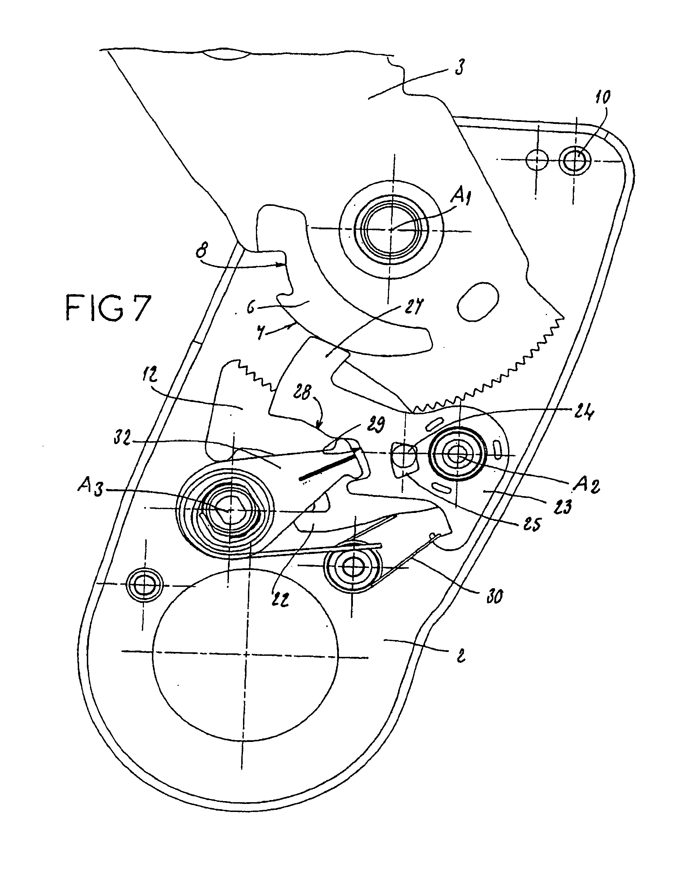

La figure 7 montre le passage du dossier de sa position nominale à sa position tablette. On voit que, au cours de ce mouvement, le doigt secondaire 32 est engagé dans l'encoche 29 pratiquée dans le levier, et ne s'oppose donc pas au basculement de l'ensemble secteur denté 12 et levier 23. Simultanément, la dent 27 du levier glisse sur la rampe 7 de la partie en saillie 6.

Un point qu'il est utile de souligner est que l'utilisateur peut relâcher son action sur l'axe d'articulation A3 puisque le dispositif est guidé dans sa rotation par la dent du levier qui glisse sur la rampe en arc de cercle.

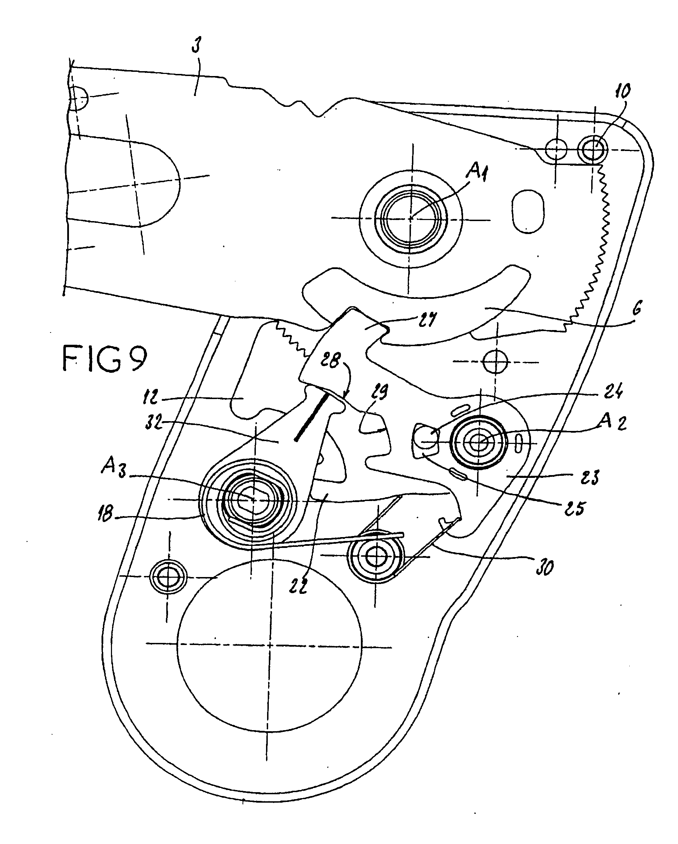

En fin de course, comme cela apparaît sur la figure 9, la dent 27 du levier 23 s'encliquète dans l'encoche 8 réalisée dans la partie en saillie 6 du flasque 3. Le doigt secondaire 32 est alors rappelé par le ressort en spirale 18 et vient s'appuyer sur la surface d'appui 28 du levier 27 bloquant ainsi le flasque 3 dans cette position.

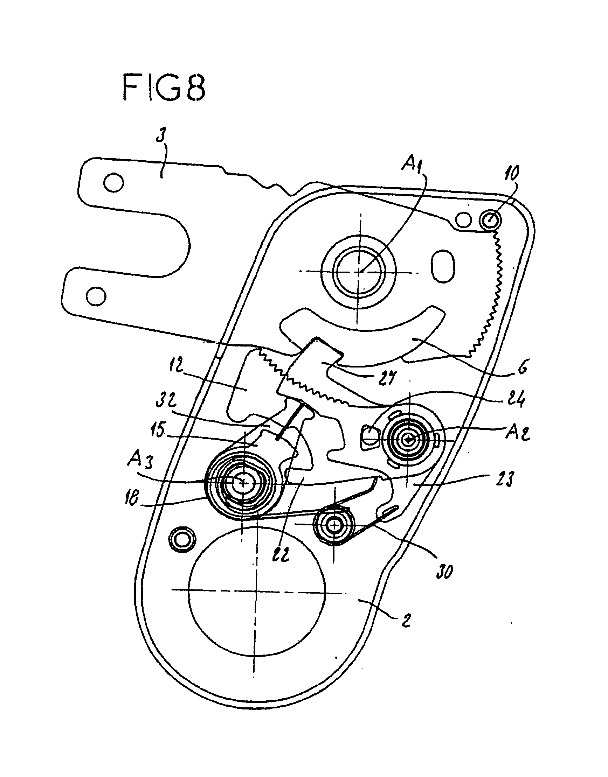

Les figures 8 et 9 montrent le point tout à fait remarquable de ce mécanisme qui est que le second étage réalise un blocage du dossier avec un encombrement très inférieur au blocage du dossier qui est réalisé par la denture du flasque du premier étage.

L'invention fournit donc un dispositif qui, tout en étant d'un encombrement réduit, permet d'assurer un blocage d'un dossier d'un siège à la fois en position nominale et en position tablette.

Bien entendu, l'invention n'est pas limitée à la forme de réalisation décrite ci-dessus à titre d'exemple non limitatif, mais elle en embrasse au contraire toutes les formes de réalisation.

## Revendications

1. Dispositif d'articulation d'un siège comprenant une assise et un dossier pouvant pivoter par rapport à l'assise dossier autour d'un axe d'articulation (A1) selon de multiples positions, notamment une position nominale dans laquelle le dossier est sensiblement à la verticale et une position tablette dans laquelle le dossier est rabattu sur l'assise, ce dispositif comprenant :
- un flasque (3) destiné à supporter le dossier pivotant par rapport à l'axe d'articulation (A1) présentant une denture (4) en arc de cercle ayant un rayon R centré sur l'axe d'articulation (A1),
- un secteur denté (12) concave pouvant être lié à l'assise, oscillant par rapport à un axe d'articulation (A2) entre une position de blocage dans laquelle il coopère avec la denture (4) du flasque (3) et une position de déblocage dans laquelle il est écarté de la denture (4) du flasque et autorise la rotation du flasque (3),
**caractérisé en ce qu'**il comprend :
- une partie en saillie (6) de la surface du flasque (3) formant une rampe (7) en arc de cercle centré sur l'axe de rotation (A1) ayant un rayon r inférieur au rayon R de la denture dans laquelle est ménagée une encoche (8), et
- un levier (23) oscillant situé dans le même plan que la partie en saillie (6) du flasque (3), coaxial et superposé au secteur denté (12) présentant une dent (27) pouvant glisser sur la rampe (7), lors du pivotement du dossier entre la position nominale et la position tablette et pouvant s'encliqueter dans l'encoche (8) de la partie en saillie en position tablette du siège, le levier (23) présente une surface d'appui (28) adjacente à une encoche (29), le dispositif comprenant de plus un doigt primaire (15) pivotant par rapport à axe (A3) et un doigt secondaire (32) engagé sur le même axe de pivotement A3 que le doigt primaire (15), pivotant entre une position dans laquelle il est en contact de la surface d'appui (28) pour maintenir le levier (23) dans une position angulaire telle que la dent (27) est engagée dans l'encoche (8) de la partie en saillie du flasque (3) et une position angulaire dans laquelle la dent (27) du levier glisse contre la rampe (6) lors du pivotement du dossier autour de l'axe (A1).

2. Dispositif selon la revendication 1, **caractérisé en ce que** la partie en saillie (6) présente une surface de butée (9) qui est en regard de la dent (27) lorsque le siège est en position nominale.

3. Dispositif selon la revendication 1 ou la revendication 2, **caractérisé en ce que** le secteur denté (12) présente un bossage (24) qui s'engage dans une lumière (25) pratiquée dans le levier.

4. Dispositif selon la revendication 1 ou la revendication 2, **caractérisé en ce que** le secteur denté (12) présente une surface d'appui (16) adjacente à une encoche (20) délimitée par un nez (22), le dispositif comprenant de plus un doigt primaire (15) pivotant par rapport à axe (A3) entre une position de blocage dans laquelle il est en contact avec la surface d'appui (16), maintenant le secteur denté (12) engrené dans la denture (4) du flasque et une position de déblocage dans laquelle le doigt primaire (15) est en face de l'encoche (20) et vient en appui sur le nez (22) pour faire basculer le secteur denté (12).

5. Dispositif selon la revendication 4, **caractérisé en ce qu'**un ressort (18) est placé sur l'axe de pivotement du doigt primaire (15) dont l'action tient à faire pivoter le doigt primaire (18) contre la surface d'appui (16) du secteur cranté (12).

6. Dispositif selon l'une des revendications 1 à 5, **caractérisé en ce que** le doigt primaire (15) et le doigt secondaire (32) sont orientés l'un par rapport à l'autre de telle sorte que, en position nominale, le doigt primaire (15) est en contact de la surface d'appui (16) du secteur denté (12) et le doigt secondaire (32) est en contact de la surface d'appui (28) du levier (23) et de telle sorte que, en position intermédiaire entre la position tablette et la position nominale, le doigt primaire (15) est en appui contre le nez (22) du secteur denté (12) et le doigt secondaire (32) est engagé dans l'encoche (20) du levier (23).

7. Dispositif selon l'une des revendications 1 à 6, **caractérisé en ce que** tous les éléments du dispositif sont embarqués dans un boîtier refermé par un couvercle.

8. Dispositif selon l'une des revendications 1 à 7, **caractérisé en ce qu'**il comprend un ressort en épingle qui s'appuie sur le secteur denté (12) et sur le levier (23).

9. Dispositif selon l'une des revendications 1 à 8, **caractérisé en ce que** le boîtier (2) est équipé d'une butée (10) contre laquelle le flasque (3) vient en appui sur le dossier en position nominale arrière contre laquelle le flasque (3) vient talonner, en position tablette.

## Patentansprüche

1. Gelenkvorrichtung eines Sitzes, der eine Sitzfläche und eine Rückenlehne umfasst, die im Verhältnis zur Sitzfläche um eine Gelenkachse (A1) gemäß vielen Positionen, insbesondere einer nominalen Position, in der die Rückenlehne etwa senkrecht ist, und einer Tablettposition, in der die Rückenlehne auf die Sitzfläche heruntergeklappt ist, schwenken kann, wobei diese Vorrichtung umfasst:
- ein Seitenblech (3), das dazu bestimmt ist, die im Verhältnis zur Gelenkachse (A1) schwenkende Rückenlehne zu stützen, das eine kreisbogenförmige Zahnung (4) mit einem auf der Gelenkachse (A1) zentrierten Radius R aufweist,
- einen konkaven gezahnten Sektor (12), der mit der Sitzfläche verbindbar ist, der im Verhältnis zu einer Gelenkachse (A2) zwischen einer Blockierposition, in der er mit der Zahnung (4) des Seitenblechs (3) zusammenarbeitet, und einer Freigabeposition, in der er von der Zahnung (4) des Seitenblechs beabstandet ist und die Rotation des Seitenblechs (3) erlaubt, schwingt,
**dadurch gekennzeichnet, dass** es umfasst:
- einen aus der Fläche des Seitenblechs (3) hervorstehenden Teil (6), der eine auf der Rotationsachse (A1) zentrierte kreisbogenförmige Rampe (7) mit einem kleineren Radius r als der Radius R der Zahnung bildet, in der eine Kerbe (8) ausgebildet ist, und
- einen schwingenden Hebel (23), der sich auf derselben Ebene wie der hervorstehende Teil (6) des Seitenblechs (3) befindet, koaxial und über dem gezahnten Sektor (12), der einen Zahn (27) aufweist, der beim Schwenken der Rückenlehne zwischen der nominalen Position und der Tablettposition über die Rampe (7) gleiten kann und in Tablettposition des Sitzes in die Kerbe (8) des hervorstehenden Teils einrasten kann, wobei der Hebel (23) eine Stützfläche (28) neben einer Kerbe (29) aufweist, wobei die Vorrichtung ferner einen primären Finger (15) umfasst, der im Verhältnis zu der Achse (A3) schwenkt, und einen sekundären Finger (32), der auf derselben Schwenkachse (A3) wie der primäre Finger (15) eingreift, der zwischen einer Position, in der er mit der Stützfläche (28) im Kontakt ist, um den Hebel (23) in einer derartigen Winkelposition zu halten, dass der Zahn (27) in der Kerbe (8) des hervorstehenden Teils des Seitenblechs (3) eingerastet ist, und einer Winkelposition, in der der Zahn (27) des Hebels beim Schwenken der Rückenlehne um die Achse (A1) gegen die Rampe (6) gleitet, schwenkt.

2. Vorrichtung nach Anspruch 1, **dadurch gekennzeichnet, dass** der hervorstehende Teil (6) eine Anschlagfläche (9) aufweist, die dem Zahn (27) gegenübersteht, wenn der Sitz in nominaler Position ist.

3. Vorrichtung nach Anspruch 1 oder Anspruch 2, **dadurch gekennzeichnet, dass** der gezahnte Sektor (12) einen Vorsprung (24) aufweist, der in eine in den Hebel eingearbeitete Öffnung (25) eingreift.

4. Vorrichtung nach Anspruch 1 oder Anspruch 2, **dadurch gekennzeichnet, dass** der gezahnte Sektor (12) neben einer Kerbe (20), die von einer Nase (22) begrenzt wird, eine Stützfläche (16) aufweist, wobei die Vorrichtung ferner einen primären Finger (15) umfasst, der im Verhältnis zur Achse (A3) zwischen einer Blockierposition, in der er mit der Stützfläche (16) im Kontakt ist, wobei der gezahnte Sektor (12) in der Zahnung (4) des Seitenblechs eingerastet gehalten wird, und einer Freigabeposition, in der der primäre Finger (15) gegenüber der Kerbe (20) ist und sich auf der Nase (22) abstützt, um den gezahnten Sektor (12) zu kippen, schwenkt.

5. Vorrichtung nach Anspruch 4, **dadurch gekennzeichnet, dass** auf der Schwenkachse des primären Fingers (15) eine Feder (18) platziert ist, deren Aktion bewirkt, dass der primäre Finger (18) gegen die Stützfläche (16) des gezahnten Sektors (12) geschwenkt wird.

6. Vorrichtung nach einem der Ansprüche 1 bis 5, **dadurch gekennzeichnet, dass** der primäre Finger (15) und der sekundäre Finger (32) im Verhältnis zueinander derart ausgerichtet sind, dass in nominaler Position der primäre Finger (15) mit der Stützfläche (16) des gezahnten Sektors (12) im Kontakt ist und der sekundäre Finger (32) mit der Stützfläche (28) des Hebels (23) im Kontakt ist und derart, dass sich der primäre Finger (15) in Übergangsposition zwischen der Tablettposition und der nominalen Position auf der Nase (22) des gezahnten Sektors (12) abstützt und der sekundäre Finger (32) in die Kerbe (20) des Hebels (23) eingreift.

7. Vorrichtung nach einem der Ansprüche 1 bis 6, **dadurch gekennzeichnet, dass** alle Element der Vorrichtung in einem Gehäuse untergebracht sind, das mit einem Deckel verschlossen ist.

8. Vorrichtung nach einem der Ansprüche 1 bis 7, **dadurch gekennzeichnet, dass** sie eine Haarnadelfeder umfasst, die sich auf dem gezahnten Sektor (12) und auf dem Hebel (23) abstützt.

9. Vorrichtung nach einem der Ansprüche 1 bis 8, **dadurch gekennzeichnet, dass** das Gehäuse (2) mit einem Anschlag (10) ausgestattet ist, auf dem sich das Seitenblech (3) auf der Rückenlehne in hinterer nominaler Position abstützt, auf dem das Seitenblech (3) in Tablettposition aufliegt.

## Claims

1. A device for articulating a seat comprising a seat bottom and a seatback able to pivot relative to the seatback bottom around a hinge pin (A1) in multiple positions, in particular a nominal position in which the seatback is substantially vertical and a table position in which the seatback is folded down on the seat bottom, said device comprising:
- a flange (3) designed to support the seatback pivoting relative to the hinge pin (A1) and having an arc of circle-shaped toothing (4) with a radius R centered on the hinge pin (A1),
- a concave toothed sector (12) that can be connected to the seat bottom, oscillating relative to a hinge pin (A2) between a blocked position, in which it cooperates with the toothing (4) of the flange (3), and an unblocked position, in which it is separated from the toothing (4) of the flange and allows the flange (3) to rotate,
**characterized in that** it comprises:
- a protruding part (6) protruding from the surface of the flange (3) forming an arc of circle-shaped ramp (7) centered on the hinge pin (A1) having a radius r smaller than the radius R of the toothing in which a notch (8) is formed, and
- an oscillating lever (23) situated in the same plane as the protruding part (6) of the flange (3), coaxial and superimposed on the toothed sector (12) having a tooth (27) that can slide on the ramp (7), during the pivoting of the seatback between the nominal position and the table position and able to snap into the notch (8) of the protruding part in the table position of the seat, the lever (23) has a bearing surface (28) adjacent to a notch (29), the device additionally comprising a primary finger (15) pivoting relative to the pin (A3) and a secondary finger (32) engaged on the same hinge pin (A3) as the primary finger (15), pivoting between a position in which it is in contact with the bearing surface (28) to keep the lever (23) in an angular position such that the tooth (27) is engaged in the notch (8) of the protruding part of the flange (3) and an angular position in which the tooth (27) of the lever slides against the ramp (6) during pivoting of the seatback around the pin (A1).

2. The device according to claim 1, **characterized in that** the protruding part (6) has a stop surface (9) that is across from the tooth (27) when the seat is in the nominal position.

3. The device according to claim 1 or claim 2, **characterized in that** the toothed sector (12) has a boss (24) that engages in a lumen (25) formed in the lever.

4. The device according to claim 1 or claim 2, **characterized in that** the toothed sector (12) has a bearing surface (16) adjacent to a notch (20) delimited by a nose (22), the device additionally comprising a primary finger (15) pivoting relative to the pin (A3) between a blocked position, in which it is in contact with the bearing surface (16), keeping the toothed sector (12) meshed in the toothing (4) of the flange, and an unblocked position, in which the primary finger (15) is across from the notch (20) and bears on the nose (22) to tilt the toothed sector (12).

5. The device according to claim 4, **characterized in that** a spring (18) is placed on the hinge pin of the primary finger (15) whereof the action tends to pivot the primary finger (18) against the bearing surface (16) of the notched sector (12).

6. The device according to one of claims 1 to 5, **characterized in that** the primary finger (15) and the secondary finger (32) are oriented relative to one another such that, in the nominal position, the primary finger (15) is in contact with the bearing surface (16) of the toothed sector (12) and the secondary finger (32) is in contact with the bearing surface (28) of the lever (23) and such that, in the intermediate position between the table position and the nominal position the primary finger (15) bears against the nose (22) of the toothed sector (12) and the secondary finger (32) is engaged in the notch (20) of the lever (23).

7. The device according to one of claims 1 to 6, **characterized in that** all of the elements of the device are onboard in a housing closed by a lid.

8. The device according to one of claims 1 to 7, **characterized in that** it comprises a hairpin spring which bears on the toothed sector (12) and on the lever (23).

9. The device according to one of claims 1 to 8, **characterized in that** the housing (2) is equipped with a stop (10) against which the flange (3) bears on the seatback in the rear nominal position against which the flange (3) bumps in the table position.
